# FASCICULE DE BREVET EUROPEEN

(11) **EP 2 455 866 B1**
(45) Date de publication et mention de la délivrance du brevet: **01.05.2013**
(21) Numéro de dépôt: 11188498.7
(22) Date de dépôt: 09.11.2011
(51) Int. Cl.: G06F 13/42

(54) **Procédé et dispositif de communication asynchrone de données sur un conducteur unique**
Verfahren und Vorrichtung zur asynchronen Datenübertragung über einen einzigen Leiter
Method and apparatus for asynchronous data communication over a single conductor

(30) Priorité: 19.11.2010 FR 1059565
(43) Date de publication de la demande: 23.05.2012
(73) Titulaire: Commissariat à l'Énergie Atomique et aux Énergies Alternatives, 75015 Paris (FR)
(72) Inventeur: Belleville, Marc, 38120 SAINT-EGREVE (FR)
(74) Mandataire: Guérin, Michel

(56) Documents cités:
- EP-A1- 1 696 621
- US-A1- 2004 039 963
- US-A1- 2004 208 200

## Description

L'invention concerne la communication de données dans les systèmes intégrés complexes, que ce soit à l'intérieur de puces de circuit intégré ou entre puces de circuit intégré, par exemple dans un empilement compact de puces.

Un des problèmes qui se pose est la complexité et la consommation de puissance des interconnexions très nombreuses entre éléments de circuit.

Un deuxième problème, lié à la complexité et aux variations dans les technologies avancées, est la grande difficulté d'obtenir un fonctionnement synchrone (c'est-à-dire utilisant un même domaine d'horloge) dans un circuit complet et/ou dans un empilement de circuits. Cette difficulté a poussé des équipes à proposer des architectures soit de type "Globalement Asynchrone, Localement Synchrone" (GALS), dans lesquelles les communications à grande distance s'effectuent de manière asynchrone, soit totalement asynchrones (les émetteurs et récepteurs de données gèrent entre eux la transmission de données sans qu'un organe central détermine pour tous les instants d'échanges).

La communication asynchrone consiste pour l'émetteur à n'émettre une donnée que s'il a reçu au préalable un signal d'acquittement de la part du récepteur, montrant que le récepteur a déjà enregistré une donnée précédente et est disponible pour en recevoir une autre.

Typiquement, une communication asynchrone robuste, de type quasi-insensible aux délais, destinée à transmettre des informations binaires 0 et 1 utilise trois conducteurs. Un premier conducteur est réservé à la transmission des "0" : il transmet une impulsion lorsqu'il doit envoyer un 0 puis revient à son niveau de repos où il reste jusqu'à ce qu'il doive transmettre à nouveau un 0. Un deuxième conducteur est réservé à la transmission des "1 " ; il transmet une impulsion lorsqu'il doit envoyer un 1 et il revient à son niveau de repos jusqu'à ce qu'il doive à nouveau transmettre un 1. Enfin, un troisième conducteur est destiné à transmettre un signal d'acquittement du récepteur à l'émetteur. Ce signal d'acquittement est une impulsion envoyée lorsque le récepteur a enregistré une donnée ; l'émetteur utilise ce signal pour ramener le conducteur qui a transmis la donnée à son niveau de repos. Un inconvénient des communications asynchrones est donc l'utilisation d'un plus grand nombre de conducteurs que les communications synchrones. Ce point est particulièrement sensible dans le cas d'un empilement de puces, interconnectées verticalement par des vias traversants, ces derniers occupant une surface de silicium important.

Pour réduire le nombre de conducteurs, on a déjà proposé de travailler en mode ternaire et de transmettre aussi bien les 1 que les 0 sur un seul conducteur. Le conducteur est à un niveau de potentiel de repos intermédiaire Vmed tant qu'il ne transmet pas une donnée. L'émetteur fait passer ce potentiel à un niveau plus élevé Vhigh pour transmettre un 1, ou à un niveau moins élevé Vlow pour transmettre un 0. Le récepteur détecte un changement de niveau, détermine la donnée en fonction du sens du changement, et envoie un signal d'acquittement sur le conducteur réservé à cet usage.

L'invention propose un procédé pour réduire encore le nombre de conducteurs dans une communication asynchrone.

Selon l'invention, on propose un procédé de transfert de données par liaison asynchrone avec transmission d'une donnée d'un émetteur vers un récepteur suivie d'un signal d'acquittement en retour du récepteur vers l'émetteur, dans lequel les données sont transmises sur un conducteur d'échange sous forme d'au moins trois niveaux de potentiel qui sont un premier niveau actif représentant une première valeur de donnée transmise, un deuxième niveau actif représentant une deuxième valeur de donnée transmise et un troisième niveau inactif ou niveau d'attente, caractérisé en ce que le signal d'acquittement est transmis sur le même conducteur d'échange que les données.

Ainsi, un seul conducteur est utilisé pour la transmission des données de manière asynchrone.

Le signal d'acquittement est de préférence produit par le récepteur sous forme du forçage du conducteur d'échange par le récepteur au niveau de potentiel inactif. L'émetteur détecte ce niveau et l'interprète comme un signal d'acquittement.

De préférence, le protocole de transmission asynchrone comporte les opérations successives suivantes :
- émission par l'émetteur d'une donnée sur le conducteur d'échange sous forme d'un forçage du conducteur d'échange à un niveau de potentiel actif,
- relâchement du forçage par l'émetteur (de préférence dès l'obtention d'un niveau actif bien établi sur le conducteur d'échange),
- détection du niveau actif par le récepteur,
- forçage du conducteur d'échange au niveau inactif par le récepteur, le passage du conducteur d'échange d'un niveau actif vers le niveau inactif constituant le signal d'acquittement,
- relâchement du forçage par le récepteur (de préférence dès l'obtention du niveau inactif correct sur le conducteur d'échange),
- détection par l'émetteur du passage du conducteur d'échange au niveau inactif.

L'émetteur utilise la détection du niveau inactif, notamment pour préparer l'émission d'une nouvelle donnée.

Par "forçage du conducteur d'échange" on entend que l'émetteur ou le récepteur impose un potentiel sur le conducteur d'échange ; par relâchement de ce forçage, on entend que l'émetteur ou le récepteur laisse ce potentiel libre d'être forcé par l'autre côté (récepteur ou émetteur respectivement) du conducteur d'échange. Le relâchement consiste à mettre le conducteur d'échange en haute impédance, ou bien à le maintenir à son potentiel par un circuit de maintien faible (par exemple un petit transistor) dont l'action de maintien peut être facilement annihilée par l'autre extrémité du conducteur d'échange (par exemple par un plus gros transistor).

Après que le récepteur a forcé le conducteur d'échange au niveau inactif, on prévoit de préférence que le récepteur détecte ce nouvel état du conducteur d'échange et que c'est cette détection qui sert à déclencher le relâchement du forçage par le récepteur.

La détection par l'émetteur du passage du conducteur d'échange au niveau inactif sert quant à elle à désactiver la donnée précédemment appliquée, en vue de préparer la transmission éventuelle d'une nouvelle donnée.

Ce procédé peut être mis en oeuvre entre
- un émetteur qui possède classiquement deux sorties de données binaires, l'une pour transmettre les 1, l'autre pour transmettre les 0, et une entrée pour recevoir un signal d'acquittement,
- et un récepteur qui possède classiquement deux entrées de données binaires, l'une pour recevoir les 1, l'autre pour recevoir les 0, et une sortie pour émettre un signal d'acquittement.

Dans ce cas, on interpose entre l'émetteur et le conducteur d'échange un circuit d'interface d'émission ; et de même on interpose entre le conducteur d'échange et le récepteur un circuit d'interface de réception.

Le circuit d'interface d'émission comprend deux entrées pour la réception de données à transmettre, une sortie d'acquittement pour émettre un signal d'acquittement, et une sortie de données destinée à être reliée à un conducteur d'échange pour transmettre les données et recevoir une information d'acquittement de la part d'un récepteur, un premier circuit de commande relié à la première entrée pour forcer la sortie de données à un premier niveau de potentiel actif lors de la réception d'une première donnée à transmettre, un deuxième circuit de commande relié à la deuxième entrée pour forcer la sortie de données à un deuxième niveau de potentiel actif lors de la réception d'une deuxième donnée à transmettre, un premier détecteur à seuil pour détecter le passage de la sortie de données du premier niveau actif à un niveau de potentiel intermédiaire entre les deux niveaux actifs, un deuxième détecteur à seuil pour détecter le passage de la sortie de données du deuxième niveau actif au niveau de potentiel intermédiaire, un circuit d'établissement de signal d'acquittement relié aux détecteurs à seuil et établissant un signal d'acquittement sur la sortie d'acquittement si l'un ou l'autre des détecteurs détecte le passage d'un niveau actif au niveau de potentiel intermédiaire.

Les détecteurs à seuil sont de préférence aptes à détecter également le passage inverse de la sortie de données depuis le potentiel intermédiaire jusqu'à l'un des potentiels actifs et ils ont leurs sorties reliées aux circuits de commande pour interrompre le forçage de la sortie de données au niveau actif après la détection du passage de la sortie de données à ce niveau actif.

De plus, les détecteurs à seuil sont de préférence reliés à un circuit de maintien du niveau de potentiel actif pour maintenir de manière faible le potentiel de la sortie de données au niveau actif à laquelle elle a été forcée après l'interruption du forçage.

Le circuit d'interface de réception comprend une entrée de données destinée à être reliée au conducteur d'échange pour recevoir des données et transmettre une information d'acquittement à destination d'un émetteur, une entrée de signal d'acquittement, deux sorties de données, un premier détecteur à seuil pour détecter le passage de l'entrée de données d'un niveau de potentiel intermédiaire à un premier niveau de potentiel actif et fournir une donnée sur la première sortie, un deuxième détecteur à seuil pour détecter le passage de l'entrée de données du niveau de potentiel intermédiaire à un deuxième niveau de potentiel actif et fournir une donnée sur la deuxième sortie, et un circuit de commande pour commander le forçage de l'entrée de données au niveau de potentiel intermédiaire lors de la réception d'un signal d'acquittement sur l'entrée de signal d'acquittement.

De préférence, les détecteurs à seuil sont aptes à détecter le passage de l'entrée de données de l'un des niveaux actifs au niveau de potentiel intermédiaire et ont leur sorties reliées au circuit de commande pour interrompre le forçage de l'entrée de données au niveau intermédiaire après la détection du passage de cette entrée au potentiel intermédiaire.

De préférence également, les détecteurs à seuil sont reliés à un circuit de maintien du niveau de potentiel intermédiaire pour maintenir de manière faible le potentiel de l'entrée de données au niveau intermédiaire après l'interruption du forçage de l'entrée de données à ce potentiel.

On notera que la publication de brevet US2004/0039963 décrit un échange spécifique sur un seul conducteur entre un module d'analyse et une unité centrale de microcontrôleur ; il ne décrit pas de signal d'acquittement qui serait produit par le récepteur sous forme du forçage du conducteur d'échange par le récepteur au niveau de potentiel inactif.

D'autres caractéristiques et avantages de l'invention apparaîtront à la lecture de la description détaillée qui suit et qui est faite en référence aux dessins annexés dans lesquels :
- la figure 1 représente la structure de communication asynchrone entre un émetteur et un récepteur avec un seul conducteur d'échange ;
- la figure 2 représente le chronogramme général des signaux qui permettent cette communication ;
- la figure 3 représente un schéma de circuit d'interface d'émission permettant la mise en oeuvre de l'invention ;
- la figure 4 représente le chronogramme des signaux mis en oeuvre dans le schéma de la figure 3 ;
- la figure 5 représente un schéma de circuit d'interface de réception permettant la mise en oeuvre de l'invention ;
- la figure 6 représente le chronogramme des signaux mis en oeuvre dans le schéma de la figure 5 ;
- la figure 7 représente des schémas électroniques de circuits à seuil utilisés dans les circuits d'interface d'émission et de réception.

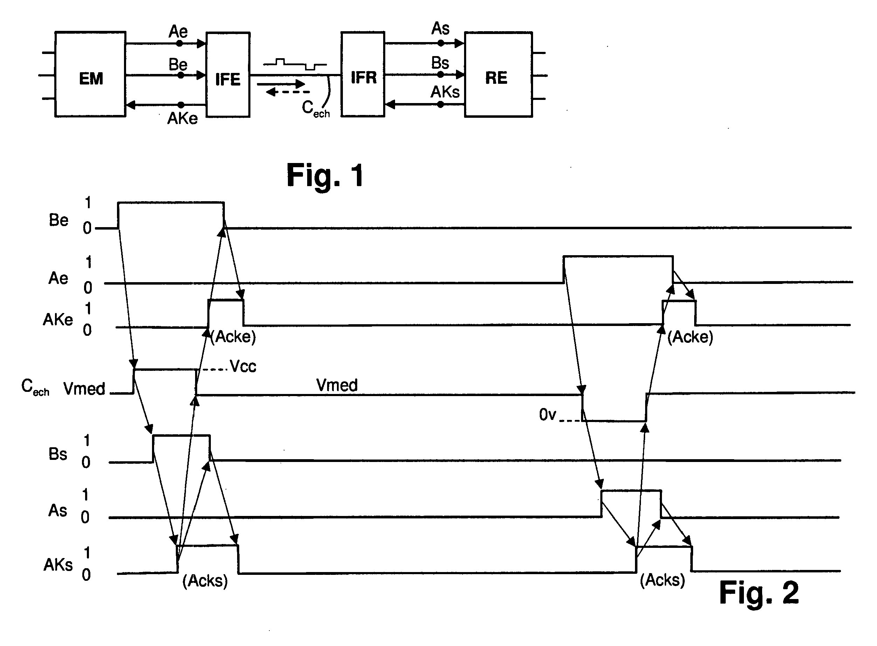

La figure 1 représente le principe général de la communication asynchrone selon l'invention entre un émetteur EM et un récepteur RE. L'émetteur EM est associé à un circuit d'interface d'émission IFE, et le récepteur est associé à un circuit d'interface de réception IFR. Les deux circuits d'interface IFE et IFR communiquent par un seul conducteur d'échange C_{ech} qui transmet une par une les données binaires 0 ou 1 de l'émetteur vers le récepteur, et qui transmet du récepteur à l'émetteur, après chaque donnée, un signal d'acquittement indiquant que le récepteur a bien reçu la donnée émise par l'émetteur.

Pour simplifier les explications, on suppose que l'émetteur est connecté à l'interface d'émission par trois bornes qui sont des bornes Ae, Be, et AKe, et on suppose que l'émetteur est alimenté entre un potentiel de masse 0 volt et un potentiel d'alimentation générale Vdd. La borne Ae sert à transmettre de l'émetteur vers l'interface d'émission les niveaux logiques 0 ; elle prend un niveau de tension bas (Vlow) lorsqu'elle ne transmet pas de donnée et un niveau de tension haut (Vhigh) lorsqu'elle émet un niveau logique 0. La borne Be sert à transmettre les niveaux logiques 1 ; elle prend un niveau de tension bas (Vlow) lorsqu'elle ne transmet pas de donnée et un niveau de tension haut (Vhigh) lorsqu'elle émet un niveau logique 1. La borne AKe transmet un signal d'acquittement Acke de l'interface d'émission vers l'émetteur EM ; ce signal est par exemple constitué par un niveau de tension haut Vhigh ; en l'absence de signal d'acquittement, la borne AKe reste au niveau bas. Le plus simple est de choisir les tensions d'alimentation 0 volt et Vdd du circuit comme niveaux logiques bas et haut respectivement, et on supposera donc dans la suite que Vlow =0 volt et Vhigh = Vdd.

De même, on suppose que le récepteur est connecté à l'interface de réception par trois bornes qui sont des bornes As, Bs, et AKs ; le récepteur est également alimenté entre un potentiel de masse 0 volt et un potentiel d'alimentation générale Vdd. La borne As sert à transmettre de l'interface de réception vers le récepteur les niveaux logiques 0 ; elle prend un niveau de tension bas (ici 0 volt) lorsqu'elle ne transmet pas de donnée et un niveau de tension haut (ici Vdd) lorsqu'elle transmet un niveau logique 0. La borne Bs sert à transmettre les niveaux logiques 1 ; elle prend un niveau de tension bas (0 volt) lorsqu'elle ne transmet pas de donnée et un niveau de tension haut (Vdd) lorsqu'elle transmet un niveau logique 1. La borne AKs transmet un signal d'acquittement Acks du récepteur vers l'interface de réception ; ce signal est par exemple constitué par un niveau de tension haut Vdd ; en l'absence de signal d'acquittement, la borne AKs reste au niveau bas 0 volt.

Entre l'interface d'émission et l'interface de réception, un seul conducteur d'échange C_{ech} transmet non seulement les données 0 et 1 issues de l'émetteur mais aussi le signal d'acquittement du récepteur.

Le conducteur d'échange C_{ech} peut être forcé dans l'un de trois états différents correspondant à trois niveaux de potentiel différents forcés sur le conducteur. Ces niveaux de potentiel sont deux niveaux dits actifs Vlow = 0 et Vhigh = Vcc qui peuvent être forcés sur le conducteur par le circuit d'interface d'émission, et un troisième niveau Vmed, dit niveau inactif ou niveau d'attente, qui peut être forcé sur le conducteur par le circuit d'interface de réception. Le niveau inactif est un niveau d'attente dans lequel le conducteur d'échange est prêt à transmettre une nouvelle donnée sous forme d'une transition vers l'un des deux niveaux actifs.

Le niveau inactif Vmed est de préférence un niveau intermédiaire entre les potentiels 0 et Vcc. Le potentiel Vmed peut être un potentiel égal à Vcc/2 mais ce n'est pas obligatoire. Il suffit que ce soit un niveau facile à distinguer (par un détecteur à seuil) par rapport à 0 et Vcc. Dans des circuits intégrés dans lesquels on dispose de deux potentiels d'alimentation différents Vcc et Vdd, avec Vcc supérieur à Vdd (par exemple 1,8 volts et 1,2 volt), le potentiel intermédiaire peut être le potentiel Vdd plus faible que Vcc. Dans un circuit dans lequel on dispose de deux potentiels d'alimentation différents Vdd et Vaa plus faible que Vdd (par exemple 1,2 volts et 0,7 volt), le potentiel intermédiaire peut être le potentiel Vaa et le potentiel actif haut peut être Vdd. Dans un circuit dans lequel on disposerait d'une alimentation symétrique +Vdd, -Vdd et une borne de masse à 0 volt, les deux potentiels actifs seraient -Vdd, +Vdd et le potentiel inactif Vmed serait 0 volt.

Enfin, on remarquera que le potentiel Vcc qui constitue un des niveaux actifs présents sur le conducteur d'échange pourrait être différent du potentiel Vdd qui définit le niveau logique haut sur les bornes Ae et Be de l'émetteur ou sur les bornes As et Bs du récepteur ; on comprendra qu'il sera souvent plus facile d'utiliser le même potentiel Vdd pour ces deux fonctions et on supposera dans la suite que c'est le cas.

La figure 2 représente le chronogramme général du protocole d'échange asynchrone qui permet cette communication sur un seul conducteur.

Les lignes du schéma représentent l'évolution du potentiel sur les bornes Be, Ae, et AKe connectant l'émetteur EM au circuit d'interface d'émission IFE ; puis le potentiel sur le conducteur d'échange ; puis les potentiels sur les bornes Bs, As, et AKs connectant le circuit d'interface de réception IFR au récepteur RE. Les flèches indiquent les causalités, c'est-à-dire quelle transition de niveau engendre quelle autre transition.

On considère que l'émetteur émet d'abord un niveau logique 1, qui se traduit par un passage de 0 à Vdd du potentiel sur la borne Be (partie gauche de la figure 2) ; puis, après une phase d'attente, il émet un niveau logique 0, traduit par un passage de 0 à Vdd du potentiel sur la borne Ae (partie droite de la figure 2).

En situation d'attente d'émission d'une donnée par l'émetteur, le conducteur d'échange est au niveau de potentiel inactif qui est le potentiel intermédiaire Vmed ; il est maintenu à cette valeur de manière faible par le circuit d'interface de réception qui l'a positionné à cette valeur lors d'un précédent échange de données. Le maintien est faible en ce sens que le conducteur est en haute impédance (maintien capacitif) ou relié à une source de tension par un circuit faible (petit transistor), mais il peut être forcé facilement à un autre potentiel (0 ou Vcc) par le circuit d'interface d'émission (possédant par exemple un circuit de commande avec un plus gros transistor).

Pour l'émission d'un niveau logique 1, l'émetteur fait passer la borne Be du niveau de potentiel 0 au niveau Vdd. Le circuit d'interface d'émission IFE détecte cette transition et force brièvement le conducteur d'échange à un niveau actif qui est un niveau de tension haut Vcc, puis relâche cette contrainte pour que le conducteur puisse se maintenir de manière faible à Vcc et puisse ensuite être forcé au niveau inactif par le circuit d'interface de réception.

L'interface de réception IFR détecte ce passage au niveau haut du conducteur d'échange et établit un niveau haut (Vdd) sur la borne de sortie Bs qui était auparavant à 0 volt ; le récepteur détecte ce niveau haut et l'utilise (selon la fonction que le récepteur doit remplir dans le système qui utilise cette communication de données). Le récepteur émet alors sur la borne AKs le signal d'acquittement Acks, à destination du circuit d'interface de réception. Le signal Acks est un passage du niveau initialement bas au niveau haut Vdd sur la borne AKs.

A la réception de cette transition, le circuit d'interface de réception IFR force alors brièvement le conducteur d'échange au niveau intermédiaire Vmed, puis relâche la contrainte sur ce potentiel. Le conducteur d'échange se maintient alors à ce potentiel Vmed, d'une manière faible. Le retour du conducteur d'échange du niveau actif au niveau inactif Vmed constitue un signal d'acquittement du circuit d'interface de réception vers le circuit d'interface d'émission. De plus, la transition de 0 à Vdd sur la borne AKs déclenche l'interruption du signal Bs ; la donnée 1 ayant été enregistrée dans le récepteur, celui-ci peut se préparer à recevoir une nouvelle donnée. L'arrêt du signal Bs déclenche ensuite l'arrêt du signal Acks, la borne AKs revenant donc à 0. Le circuit d'interface de réception est alors prêt pour recevoir une nouvelle donnée.

Le signal d'acquittement constitué par le retour du conducteur d'échange au potentiel Vmed est détecté par le circuit d'interface d'émission IFE. Ce dernier établit alors sur la borne AKe un signal d'acquittement Acke à destination l'émetteur EM. Le signal Acke peut être un front de montée du niveau 0 volt au niveau Vdd sur la borne AKe.

Le front de montée du signal Acke provoque dans l'émetteur la désactivation de la donnée sur la borne Be, c'est-à-dire qu'il déclenche dans l'émetteur l'interruption de l'application d'un niveau Vdd sur la borne Be ; cela signifie que la donnée 0 a bien été transmise et que l'émetteur peut se préparer pour une nouvelle émission de donnée. La borne Be repasse au niveau 0 volt, après quoi le signal Acke s'arrête, c'est-à-dire que la borne AKe repasse à 0 volt. Le circuit d'interface d'émission est alors prêt à recevoir une nouvelle donnée de l'émetteur.

Le protocole est le même pour la transmission d'un niveau logique 0 (partie droite de la figure 1 ) :
Le conducteur d'échange est initialement au niveau Vmed où il a été forcé par le circuit d'interface de réception.

Pour l'émission d'un niveau logique 0, l'émetteur fait passer la borne Ae du niveau de potentiel 0 au niveau Vdd. Le circuit d'interface d'émission IFE détecte cette transition et force brièvement le conducteur d'échange à un niveau de tension haut Vcc, puis relâche cette contrainte pour que le conducteur puisse se maintenir de manière faible à Vcc et puisse ensuite être forcé à un autre niveau par le circuit d'interface de réception.

L'interface de réception IFR détecte ce passage au niveau haut du conducteur d'échange et établit un niveau haut (Vdd) sur la borne de sortie As qui était auparavant à 0 volt ; le récepteur détecte ce niveau haut et l'utilise selon la fonction qui lui est attribuée dans le système électronique qui utilise cette communication de données. Le récepteur émet alors sur la borne AKs le signal d'acquittement Acks à destination du circuit d'interface de réception. Le signal Acks est un passage du niveau initialement bas au niveau haut Vdd sur la borne AKs.

A la réception de cette transition, le circuit d'interface de réception IFR force alors brièvement le conducteur d'échange au niveau intermédiaire Vmed, puis relâche la contrainte sur ce potentiel. Le conducteur d'échange se maintient à ce potentiel Vmed, d'une manière faible. Le retour du conducteur d'échange au niveau Vmed constitue un signal d'acquittement du circuit d'interface de réception vers le circuit d'interface d'émission. De plus, la transition de 0 à Vdd sur la borne AKs déclenche l'interruption du signal As, c'est-à-dire que la donnée 0 a été enregistrée dans le récepteur, celui-ci pouvant se préparer à recevoir une nouvelle donnée. L'arrêt du signal As déclenche par ailleurs l'arrêt du signal Acks, la borne AKs revenant donc à 0.

Le signal d'acquittement constitué par le retour du conducteur d'échange au potentiel Vmed est détecté par le circuit d'interface d'émission IFE. Ce dernier établit alors sur la borne AKe un signal d'acquittement Acke à destination l'émetteur EM. Le signal Acke est encore un front de montée du niveau 0 volt au niveau Vdd sur la borne AKe.

Le front de montée du signal Acke provoque dans l'émetteur la désactivation de la donnée sur la borne Ae, c'est-à-dire qu'il déclenche dans l'émetteur l'interruption de l'application d'un niveau Vdd sur la borne Ae ; cela signifie que la donnée 0 a bien été transmise et que l'émetteur peut se préparer pour une nouvelle émission de donnée. La borne Ae repasse au niveau 0 volt, après quoi le signal Acke s'arrête, c'est-à-dire que la borne AKe repasse à 0 volt.

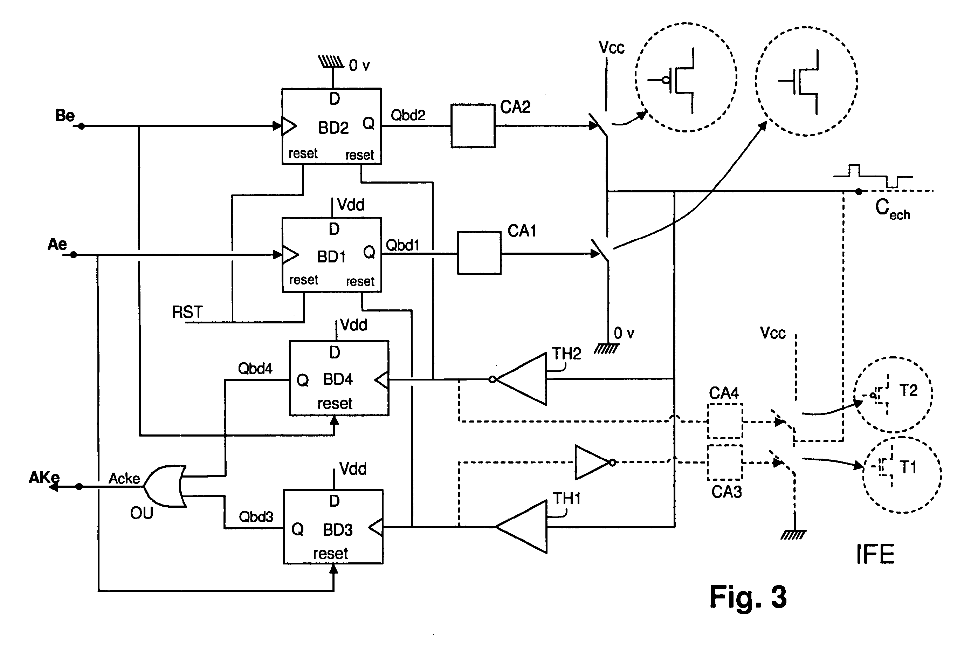

La figure 3 représente un schéma de principe du circuit d'interface d'émission qu'on peut utiliser pour mettre en oeuvre l'invention. Il comporte deux entrées de données Ae et Be, une sortie de données (vers un conducteur d'échange C_{ech}), et une sortie de signal d'acquittement AKe.

L'entrée Ae est connectée à l'entrée d'activation d'une première bascule BD1 qui est une bascule de type D dont la fonction est de reporter sur sa sortie Q l'état logique de son entrée D lors de la réception d'un front montant sur l'entrée d'activation. L'entrée D de la bascule BD1 est à Vdd. Sur un front montant sur Ae, la sortie Q (Q_{bd1}), initialement au niveau bas, passe au niveau logique haut. Un circuit d'adaptation CA1 reçoit la sortie Q_{bdi} de la bascule BD1 et commande alors l'application d'une tension 0 (niveau bas) sur le conducteur d'échange C_{ech}. Cette tension est appliquée par l'intermédiaire d'un interrupteur qui peut être constitué par exemple par un transistor NMOS, le circuit CA1 fournissant un niveau logique haut pour rendre conducteur ce transistor.

De même, l'entrée Be est connectée à l'entrée d'activation d'une deuxième bascule BD2 qui est une bascule D dont l'entrée D est à un niveau logique bas. Lors d'un front montant sur Be, la bascule BD2 reporte sur sa sortie Q_{bd2} (initialement au niveau haut) ce niveau bas. Un circuit d'adaptation CA2 reçoit la sortie Q_{bd2} de la bascule BD2 et commande alors l'application d'une tension haute Vcc sur le conducteur d'échange. Cette tension est appliquée par l'intermédiaire d'un interrupteur qui peut être constitué par exemple par un transistor PMOS, le circuit CA2 fournissant un niveau logique bas pour rendre conducteur ce transistor.

Les circuits CA1 et CA2 réalisent également les éventuelles translations de niveau nécessaires entre les bascules qui ont les mêmes alimentations que l'émetteur et les circuits reliés au conducteur d'échange.

Les bascules sont alors remises à un état initial suite au changement d'état du conducteur d'échange, c'est-à-dire que le passage du conducteur d'échange au niveau bas est détecté et remet à son état initial (sortie Q à 0) la bascule BD1, et de même, le passage du conducteur d'échange au niveau haut remet à son état initial (sortie Q=1) la bascule BD2. Dans leur état initial, les bascules BD1 et BD2 relâchent le forçage du potentiel sur le conducteur d'échange ; elles le laissent en haute impédance ou le maintiennent faiblement à la valeur à laquelle elles l'ont forcé.

La réinitialisation des bascules est réalisée grâce à deux détecteurs à seuil TH1 et TH2 qui sont reliés au conducteur d'échange. Le détecteur TH1 détecte le passage du conducteur d'échange à 0. Sa sortie est reliée à une entrée de réinitialisation de la bascule BD1. De même, le détecteur TH2 détecte le passage du conducteur d'échange à Vdd. Sa sortie est reliée à une entrée de réinitialisation de la bascule BD2.

Les circuits TH1 et TH2 réalisent également les éventuelles translations de niveau nécessaires entre les bascules et le conducteur d'échange.

Par ailleurs lorsque le conducteur d'échange est ultérieurement forcé à revenir à son niveau inactif Vmed (par le circuit d'interface de réception), les mêmes détecteurs à seuil (mais cela pourrait être d'autres détecteurs) sont utilisés pour engendrer un signal d'acquittement Acke sur la borne AKe. Ceci est obtenu à partir de deux autres bascules D, BD3 et BD4, et une porte logique combinant les sorties de ces deux bascules. La bascule BD3 reçoit sur son entrée d'activation la sortie du détecteur à seuil TH1 ; elle est configurée pour réagir à la détection par le détecteur TH1 du passage du conducteur d'échange de 0 à Vmed. La bascule BD3 a son entrée D à Vdd et une sortie Q_{bd3} ; elle a de plus une entrée de réinitialisation recevant le signal sur l'entrée Ae et réinitialisant la sortie Q à zéro sur le front descendant du signal sur l'entrée Ae (donc à la fin de l'émission d'une donnée). La bascule BD4 est configurée de manière similaire ; son entrée D est à Vdd mais elle reçoit sur son entrée d'activation la sortie du détecteur à seuil TH2 et sur son entrée de réinitialisation le signal sur l'entrée Be. Les sorties Q_{bd3} et Q_{bd4} des bascules BD3 et BD4 sont combinées dans une porte OU.

En l'absence de donnée sur l'entrée Ae ou Be les bascules BD3 et BD4 fournissent un niveau 0 sur leur sortie. La porte logique, ici une porte OU, fournit un niveau 0.

Après l'émission du début d'une donnée sur la borne Ae, et la réception par le circuit d'interface de réception, le retour du conducteur d'échange de 0 à Vmed, détecté par le détecteur TH1, fait basculer la sortie de la bascule BD3 à Vdd. La porte logique OU fournit alors un signal Acke sur la sortie AKe. Ce signal est utilisé par l'émetteur en amont du circuit d'interface d'émission de la figure 3 pour interrompre la donnée sur la borne Ae. Cette interruption réinitialise la bascule BD3 à 0, interrompant le signal Acke.

De même, après l'émission du début d'une donnée sur la borne Be, et la réception par le circuit d'interface de réception, le retour du conducteur d'échange de Vcc à Vmed, détecté par le détecteur TH2, fait basculer à Vdd la sortie de la bascule BD4. La porte logique OU fournit encore un signal Acke sur la sortie AKe. Ce signal est utilisé par l'émetteur pour interrompre la donnée sur la borne Be. Cette interruption réinitialise la bascule BD4 à 0, interrompant le signal Acke.

Une entrée RST permet d'initialiser les bascules BD1 et BD2 au départ pour éviter qu'elles ne soient dans un état aléatoire avant l'apparition d'une première donnée et qu'elles ne forcent le conducteur d'échange à un niveau de potentiel non souhaité. Les bascules BD1 et BD2 sont représentées pour simplifier comme ayant chacune deux entrées de réinitialisation, mais on peut bien sûr prévoir des bascules avec une seule entrée de réinitialisation et un circuit logique combinant les signaux RST et les sorties des détecteurs TH1 ou TH2 pour établir le signal de réinitialisation.

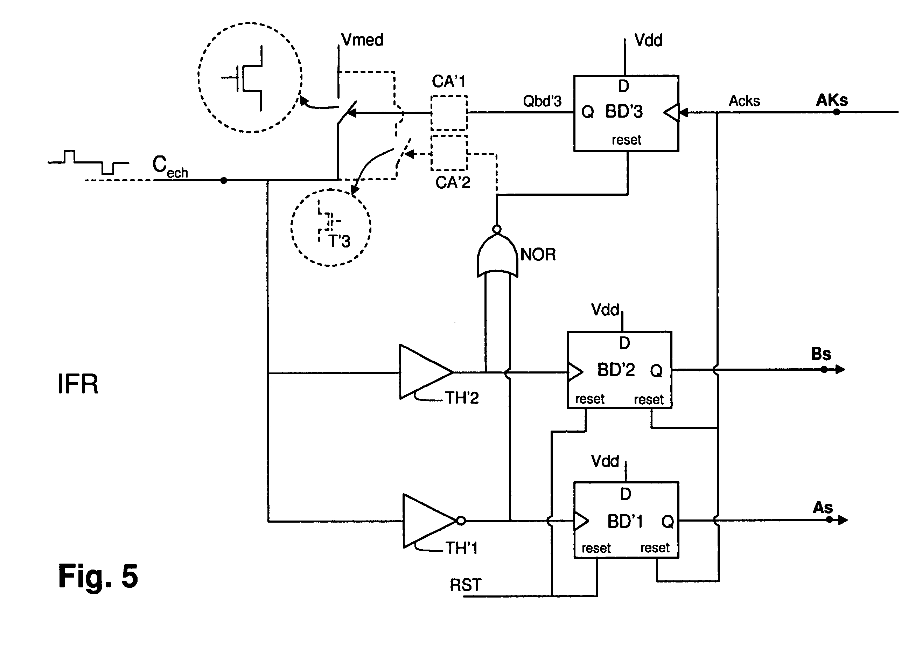

Le maintien faible du conducteur d'échange à 0 ou à Vdd par des transistors de petite taille T1 et T2 est représenté en pointillés sur la figure 3. Ces transistors sont commandés par la sortie des détecteurs TH1 et TH2 au travers des circuits d'adaptation, respectivement CA3 et CA4. Le transistor T1 maintient le conducteur d'échange à 0 lorsque le détecteur TH1 fournit un signal de détection du passage de ce conducteur à 0. Il cesse ce maintien lorsque le conducteur d'échange est forcé par le circuit d'interface de réception à Vmed. Le transistor T2 maintient le conducteur d'échange à Vcc lorsque le détecteur TH2 fournit un signal de détection du passage de ce conducteur à Vcc. Il cesse ce maintien lorsque le conducteur d'échange est forcé par le circuit d'interface de réception à Vmed. Les transistors T1 et T2 sont plus petits que le transistor (représenté par un interrupteur sur la figure 5) qui, dans le circuit d'interface de réception, sert à forcer le conducteur d'échange à Vmed. La raison de cette différence de taille est, comme on l'a dit plus haut, de permettre le forçage du conducteur d'échange à Vmed par le circuit d'interface de réception malgré ce maintien par les transistors T1 et T2 du côté émission.

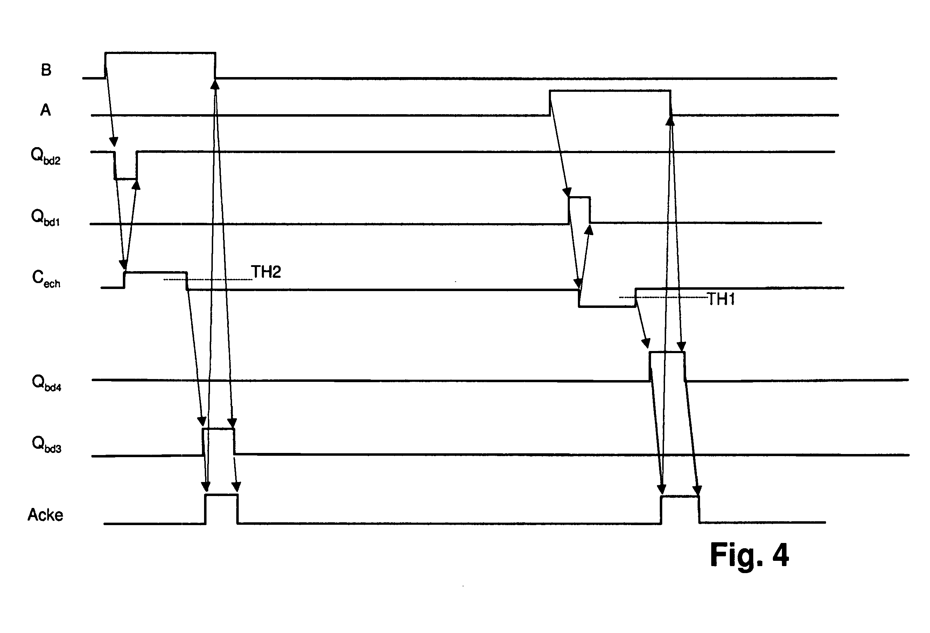

La figure 4 représente le chronogramme des basculements décrits en relation avec la figure 3, lors de l'émission d'une donnée sur la borne Be puis lors de l'émission d'une donnée sur la borne Ae. Les flèches rappellent les causalités indiquées ci-dessus.

La figure 5 représente un exemple de réalisation du circuit d'interface de réception IFR. Il comporte deux sorties de données As et Bs, une entrée de données (en provenance du conducteur d'échange C_{ech}), et une entrée de signal d'acquittement AKs.

Le conducteur d'échange est relié aux entrées de deux détecteurs à seuil TH'1 et TH'2 semblables aux détecteurs TH1 et TH2. Le premier a pour fonction de détecter dans un sens le passage du conducteur d'échange du niveau de potentiel inactif Vmed au niveau actif bas 0 volt et dans l'autre sens le retour du niveau bas au niveau inactif ; il détecte donc d'abord l'émission d'une donnée 0 en provenance de l'émetteur, puis en sens inverse il détecte le forçage du conducteur d'échange au niveau inactif en vue de relâcher ce forçage. Le deuxième a pour fonction de détecter dans un sens le passage du conducteur d'échange du niveau de potentiel inactif Vmed au niveau actif haut Vcc, puis, dans l'autre sens le retour au niveau inactif ; il détecte l'émission d'une donnée 1, puis le forçage au niveau inactif en vue d'autoriser le relâchement de ce forçage.

Les circuits TH'1 et TH'2 réalisent également les éventuelles translations de niveau nécessaires entre les bascules et le conducteur d'échange.

Le détecteur TH'1 est relié à l'entrée d'activation d'une bascule D BD'1. En cas de détection d'une donnée 0, la bascule transmet sur sa sortie Q le niveau Vdd appliqué en permanence sur son entrée D. La sortie Q est reliée à la borne As. La borne As prend donc le niveau logique Vdd lorsqu'une donnée 0 est détectée sur le conducteur d'échange.

Le détecteur TH'2 est relié à l'entrée d'activation d'une bascule D BD'2. En cas de détection d'une donnée 1, la bascule transmet sur sa sortie Q le niveau Vdd appliqué en permanence sur son entrée D. La sortie Q est reliée à la borne Bs. La borne Bs prend donc le niveau logique Vdd lorsqu'une donnée 1 est détectée sur le conducteur d'échange.

Le circuit récepteur recevant la donnée 0 sur la borne As ou une donnée 1 sur la borne Bs élabore un signal d'acquittement Acks sur la borne AKs, sous la forme d'un niveau Vdd, la borne AKs étant normalement au repos au niveau 0.

La borne AKs est reliée à l'entrée d'activation d'une bascule BD'3 de type D dont le rôle est d'abord de commander le forçage du conducteur d'échange au niveau inactif puis de relâcher ce forçage. La sortie O_{bd'3} de la bascule est initialement au niveau logique 0 où elle a été mise lorsque le niveau inactif a été détecté sur le conducteur d'échange (état relâché). Lorsque la borne AKs reçoit de l'émetteur un signal d'acquittement, c'est-à-dire un niveau Vdd (indépendamment du fait que la donnée transmise ait été un 0 ou un 1), la bascule transmet le niveau Vdd de son entrée D vers sa sortie Q_{bd}'₃ . Celle-ci commande alors, via un circuit d'adaptation CA'1, le forçage du conducteur d'échange au niveau inactif Vmed, en fermant l'interrupteur qui relie le conducteur d'échange au potentiel Vmed. Cet interrupteur est en pratique un transistor MOS. Le conducteur d'échange passe donc du niveau actif (0 ou Vdd) à Vmed, ce qui constitue l'information d'acquittement à destination du circuit d'interface d'émission.

Le détecteur à seuil TH'1 ou TH'2 qui avait détecté la présence d'un niveau actif détecte la disparition de ce niveau actif puisque le conducteur d'échange est revenu au niveau Vmed. Une porte logique NOR reçoit les sorties des deux détecteurs TH'1 et TH'2 et fournit à ce moment une transition logique du niveau bas vers le niveau haut car les sorties des deux détecteurs sont alors toutes deux revenues au niveau 0 et la fonction d'une porte NOR est de donner un niveau 1 quand les deux entrées sont à 0. La sortie de la porte NOR est appliquée à une entrée de réinitialisation de la bascule BD'3 pour remettre la sortie de celle-ci à 0 et par conséquent ouvrir l'interrupteur pour relâcher la contrainte de forçage du conducteur d'échange à Vmed. Ce relâchement du forçage ne modifie pas le potentiel du conducteur d'échange ; celui-ci reste au niveau inactif Vmed, mais le relâchement autorise le forçage ultérieur du conducteur d'échange à un niveau actif par le circuit d'interface d'émission. La sortie de la porte NOR passera automatiquement à zéro sous l'action de l'un des deux détecteurs TH'1, TH'2 lors de l'arrivée d'une prochaine donnée.

Après le relâchement, le conducteur d'échange est de préférence faiblement maintenu à Vmed par un circuit de maintien, représenté en pointillés sur la figure 5, comprenant un transistor T'3 commandé par la sortie de la porte NOR via un circuit d'adaptation CA'2. Ce transistor est plus petit que les transistors (représentés par des interrupteurs à la figure 3) qui forcent le conducteur d'échange à 0 ou Vdd lors de l'émission d'une donnée.

Le signal d'acquittement Acks issu du récepteur sert également à réinitialiser les bascules BD'1 et BD'2 pour remettre les bornes As et Bs à zéro après que le récepteur ait confirmé (par le signal d'acquittement Acks) qu'il a bien pris en compte la donnée reçue.

Enfin, une entrée RST permet d'initialiser les bascules BD'1 et BD'2 au départ pour éviter qu'elles ne soient dans un état aléatoire avant l'apparition d'une première donnée. On peut prévoir aussi de forcer initialement le conducteur d'échange au potentiel Vmed, ce forçage étant suivi d'un relâchement induit par les détecteurs TH'1 et TH'2.

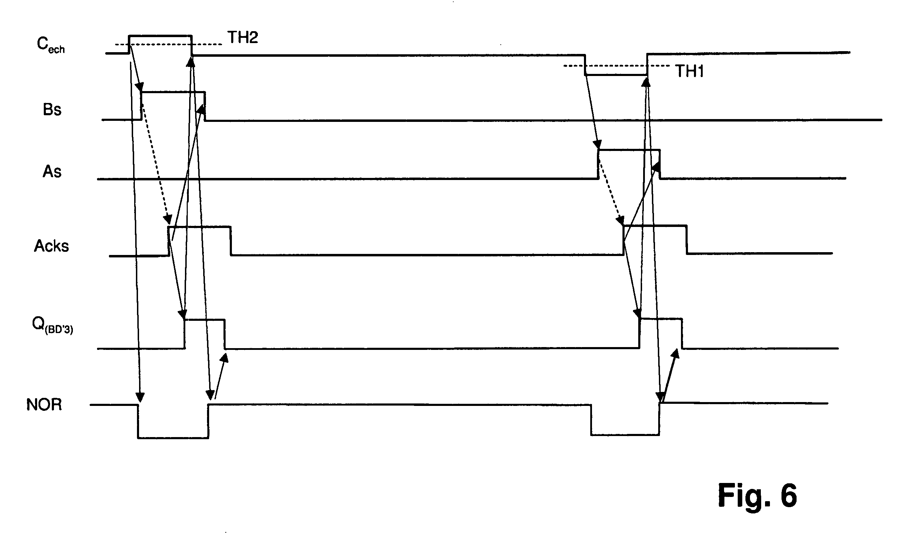

La figure 6 représente le chronogramme des basculements décrits en relation avec la figure 5, lors de la réception d'une donnée 0 puis d'une donnée 1 sur le conducteur d'échange.

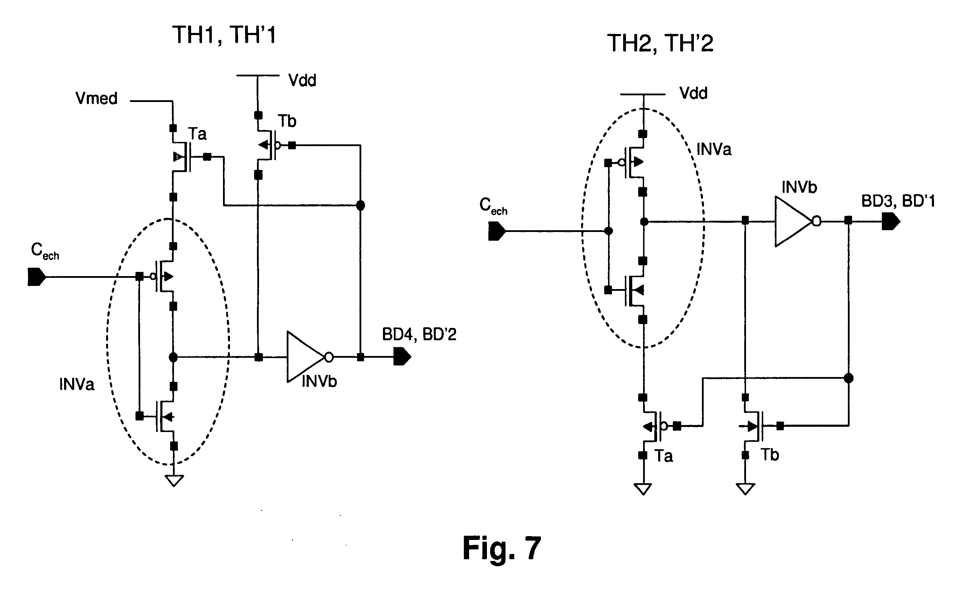

La figure 7 représente une constitution possible pour les détecteurs à seuil TH1, TH'1 et TH2, TH'2, dans le cas d'une tension Vmed inférieure à Vdd. Ce sont des détecteurs à hystérésis pour éviter une instabilité et présentant une consommation statique la plus faible possible. Ils comprennent chacun un inverseur d'entrée INVa en série avec un inverseur de sortie INVB. Les inverseurs sont constitués classiquement par une paire de transistors NMOS et PMOS en série avec leurs drains réunis et leurs grilles réunies. L'inverseur INVa reçoit sur les grilles la tension présente sur le conducteur d'échange. Il est alimenté en énergie à travers un transistor Ta, en série avec la paire de transistors ; le transistor Ta est rendu conducteur pour un état déterminé de la sortie de l'inverseur INVb.

Dans le cas de TH1 et TH'1, qui doivent détecter le passage du conducteur d'échange de Vmed à zéro puis de 0 à Vmed, le transistor Ta est un transistor NMOS relié à un potentiel Vmed. Ce transistor est rendu conducteur lorsque la sortie de l'inverseur INVb est à 1, c'est-à-dire lorsque l'entrée de l'inverseur INVa est à 1, donc lorsque le conducteur d'échange est à Vmed. Lorsque le conducteur d'échange descend au-dessous d'un potentiel de seuil de basculement de l'inverseur INVa, celui-ci bascule, fait basculer l'inverseur INVb, ce qui met à 0 la sortie de ce dernier, bloquant le transistor Ta, ce qui isole l'inverseur INVa du potentiel Vmed. Un transistor PMOS Tb reboucle la sortie de l'inverseur INVb sur son entrée ; il est rendu conducteur par le fait que la sortie est à 0. L'état de la sortie du détecteur se maintient tant que la tension sur le conducteur d'échange ne remonte pas au-dessus du seuil. Lorsque la tension dépasse le seuil, elle fait basculer l'inverseur INVa qui fait basculer à son tour l'inverseur INVb.

De même, dans le cas de TH2 et TH'2, qui doivent détecter le passage du conducteur d'échange de Vdd à Vmed ou de Vmed à Vdd, le transistor Ta est un transistor PMOS relié à la masse. Ce transistor est rendu conducteur lorsque la sortie de l'inverseur INVb est à 0, c'est-à-dire lorsque l'entrée de l'inverseur INVa est à 0, donc lorsque le conducteur d'échange est à Vmed (la tension Vmed étant insuffisante pour faire basculer l'inverseur INVa. Lorsque le conducteur d'échange monte au-dessus d'un seuil de basculement situé entre Vmed et Vdd, l'inverseur INVa bascule, fait basculer l'inverseur INVb, ce qui met à 1 la sortie de ce dernier, bloquant le transistor Ta, ce qui isole l'inverseur INVa de la masse. Un transistor NMOS Tb reboucle la sortie de l'inverseur INVb sur son entrée ; il est rendu conducteur par le fait que la sortie est à 1. L'état de la sortie du détecteur se maintient tant que la tension sur le conducteur d'échange ne redescend pas au-dessous du seuil.

On a ainsi décrit un circuit d'interface d'émission et de réception permettant la communication asynchrone à travers un seul fil de connexion à travers lequel passent les données et une information d'acquittement.

## Revendications

1. Procédé de transfert de données par liaison asynchrone avec transmission d'une donnée d'un émetteur vers un récepteur suivie d'un signal d'acquittement en retour du récepteur vers l'émetteur, dans lequel les données sont transmises sur un conducteur d'échange C_{ech} sous forme d'au moins trois niveaux de potentiel, le premier (0) représentant une première valeur de donnée transmise, le deuxième représentant un niveau inactif (Vmed) et le troisième (Vdd) représentant une deuxième valeur de donnée transmise, **caractérisé en ce que** le signal d'acquittement est transmis sur le même conducteur d'échange que les données et est produit par le récepteur sous forme du forçage du conducteur d'échange par le récepteur au niveau de potentiel inactif, l'émetteur détectant ce forçage.

2. Procédé selon la revendication 1, **caractérisé en ce que** les opérations suivantes sont successivement effectuées :
- émission par l'émetteur d'une donnée sur le conducteur d'échange sous forme d'un forçage du conducteur d'échange à un niveau de potentiel actif,
- relâchement du forçage par l'émetteur et détection du niveau actif par le récepteur,
- forçage du conducteur d'échange au niveau inactif par le récepteur, le passage du conducteur d'échange d'un niveau actif vers le niveau inactif constituant le signal d'acquittement,
- relâchement du forçage par le récepteur et détection par l'émetteur du passage du conducteur d'échange au niveau inactif.

3. Procédé selon la revendication 2, **caractérisé en ce que** passage du conducteur d'échange au niveau inactif est détecté par le récepteur lui-même qui relâche ensuite ce forçage.

4. Procédé selon la revendication 3, **caractérisé en ce que** la détection par l'émetteur du passage au niveau inactif engendre un signal de désactivation de la donnée en vue de la transmission d'une nouvelle donnée.

5. Circuit d'interface d'émission pour une communication asynchrone, comprenant deux entrées (Ae, Be) pour la réception de données à transmettre, une sortie d'acquittement (AKe) pour émettre un signal d'acquittement, et une sortie de données destinée à être reliée à un conducteur d'échange (C_{ech}) pour transmettre les données et recevoir une information d'acquittement de la part d'un récepteur, un premier circuit de commande (BD1, CA1) relié à la première entrée (Ae) pour forcer la sortie de données à un premier niveau de potentiel actif lors de la réception d'une première donnée à transmettre, un deuxième circuit de commande (BD2, CA2) relié à la deuxième entrée pour forcer la sortie de données à un deuxième niveau de potentiel actif lors de la réception d'une deuxième donnée à transmettre, un premier détecteur à seuil (TH1) pour détecter le passage de la sortie de données du premier niveau actif à un niveau de potentiel intermédiaire (Vmed), un deuxième détecteur à seuil (TH2) pour détecter le passage de la sortie de données du deuxième niveau actif au niveau de potentiel intermédiaire, un circuit d'établissement de signal d'acquittement (BD3, BD4) relié aux détecteurs à seuil et établissant un signal d'acquittement (Acke) sur la sortie d'acquittement si l'un ou l'autre des détecteurs détecte le passage d'un niveau actif au niveau de potentiel intermédiaire.

6. Circuit d'interface d'émission selon la revendication 5, **caractérisé en ce que** les détecteurs à seuil sont aptes à détecter également le passage inverse de la sortie de données depuis le potentiel intermédiaire jusqu'à l'un des potentiels actifs et ont leur sorties reliées aux circuits de commande pour interrompre le forçage de la sortie de données au niveau actif après la détection du passage de la sortie de données à ce niveau actif.

7. Circuit d'interface d'émission selon la revendication 6, **caractérisé en ce que** les détecteurs à seuil sont reliés à un circuit de maintien du niveau de potentiel actif pour maintenir de manière faible le potentiel de la sortie au niveau actif à laquelle elle a été forcée après l'interruption du forçage.

8. Circuit d'interface de réception pour une communication asynchrone, comprenant une entrée de données destinée à être reliée à un conducteur d'échange (C_{ech}), une entrée de signal d'acquittement (AKs), deux sorties de données (As, Bs), un premier détecteur à seuil (TH'1) pour détecter le passage de l'entrée de données d'un niveau de potentiel intermédiaire à un premier niveau de potentiel actif et fournir une donnée sur la première sortie, un deuxième détecteur à seuil (TH'2) pour détecter le passage de l'entrée de données du niveau de potentiel intermédiaire à un deuxième niveau de potentiel actif et fournir une donnée sur la deuxième sortie, et un circuit de commande (BD'3) pour commander le forçage de l'entrée de données au niveau de potentiel intermédiaire lors de la réception d'un signal d'acquittement (Acks) sur l'entrée de signal d'acquittement.

9. Circuit d'interface de réception selon la revendication 8, **caractérisé en ce que** les détecteurs à seuil sont aptes à détecter le passage de l'entrée de données de l'un des niveaux actifs au niveau de potentiel intermédiaire et ont leur sorties reliées au circuit de commande pour interrompre le forçage de l'entrée de données au niveau intermédiaire après la détection du passage de cette entrée au potentiel intermédiaire.

10. Circuit d'interface de réception selon la revendication 9, **caractérisé en ce que** les détecteurs à seuil sont reliés à un circuit de maintien du niveau de potentiel intermédiaire pour maintenir de manière faible le potentiel de l'entrée de données au niveau intermédiaire après l'interruption du forçage de l'entrée de données à ce potentiel.

## Claims

1. A method of data transfer by asynchronous link with transmission of a data item from a sender to a receiver followed by an acknowledgment signal in return from the receiver to the sender, in which the data are transmitted on an exchange conductor C_{ech} in the form of at least three levels of potential, the first (0) representing a first value of data item transmitted, the second representing an inactive level (Vmed) and the third (Vdd) representing a second value of data item transmitted, **characterized in that** the acknowledgment signal is transmitted on the same exchange conductor as the data and is produced by the receiver in the form of the forcing of the exchange conductor by the receiver to the inactive potential level, the sender detecting this forcing.

2. The method as claimed in claim 1, **characterized in that** the following operations are performed successively:
- sending by the sender of a data item on the exchange conductor in the form of a forcing of the exchange conductor to an active potential level,
- relaxation of the forcing by the sender and detection of the active level by the receiver,
- forcing of the exchange conductor to the inactive level by the receiver, the switching of the exchange conductor from an active level to the inactive level constituting the acknowledgment signal,
- relaxation of the forcing by the receiver and detection by the sender of the switching of the exchange conductor to the inactive level.

3. The method as claimed in claim 2, **characterized in that** switching of the exchange conductor to the inactive level is detected by the receiver itself which thereafter relaxes this forcing.

4. The method as claimed in claim 3, **characterized in that** the detection by the sender of the switching to the inactive level engenders a signal for disabling the data item with a view to the transmission of a new data item.

5. A send interface circuit for an asynchronous communication, comprising two inputs (Ae, Be) for the reception of data to be transmitted, an acknowledgment output (AKe) for sending an acknowledgment signal, and a data output intended to be linked to an exchange conductor (C_{ech}) so as to transmit the data and receive an information item regarding acknowledgment on the part of a receiver, a first control circuit (BD1, CA1) linked to the first input (Ae) for forcing the data output to a first active potential level upon the receipt of a first data item to be transmitted, a second control circuit (BD2, CA2) linked to the second input for forcing the data output to a second active potential level upon the receipt of a second data item to be transmitted, a first threshold-based detector (TH1) for detecting the switching of the data output from the first active level to an intermediate potential level (Vmed), a second threshold-based detector (TH2) for detecting the switching of the data output from the second active level to the intermediate potential level, an acknowledgment signal establishment circuit (BD3, BD4) linked to the threshold-based detectors and establishing an acknowledgment signal (Acke) on the acknowledgment output if one or the other of the detectors detects the switching from an active level to the intermediate potential level.

6. The send interface circuit as claimed in claim 5, **characterized in that** the threshold-based detectors are able to also detect the reverse switching of the data output from the intermediate potential up to one of the active potentials and have their outputs linked to the control circuits for interrupting the forcing of the data output to the active level after the detection of the switching of the data output to this active level.

7. The send interface circuit as claimed in claim 6, **characterized in that** the threshold-based detectors are linked to a circuit for holding the active potential level so as to weakly hold the potential of the output at the active level to which it has been forced after the interruption of the forcing.

8. A receive interface circuit for an asynchronous communication, comprising a data input intended to be linked to an exchange conductor (C_{ech}), an acknowledgment signal input (AKs), two data outputs (As, Bs), a first threshold-based detector (TH'1) for detecting the switching of the data input from an intermediate potential level to a first active potential level and for providing a data item on the first output, a second threshold-based detector (TH'2) for detecting the switching of the data input from the intermediate potential level to a second active potential level and for providing a data item on the second output, and a control circuit (BD'3) for controlling the forcing of the data input to the intermediate potential level upon the receipt of an acknowledgment signal (Acks) on the acknowledgment signal input.

9. The receive interface circuit as claimed in claim 8, **characterized in that** the threshold-based detectors are able to detect the switching of the data input from one of the active levels to the intermediate potential level and have their outputs linked to the control circuit so as to interrupt the forcing of the data input to the intermediate level after the detection of the switching of this input to the intermediate potential.

10. The receive interface circuit as claimed in claim 9, **characterized in that** the threshold-based detectors are linked to a circuit for holding the intermediate potential level so as to weakly hold the potential of the data input at the intermediate level after the interruption of the forcing of the data input to this potential.

## Patentansprüche

1. Verfahren zum Übertragen von Daten über eine asynchrone Verbindung mit Übertragung von Daten eines Senders zu einem Empfänger, gefolgt von einem Quittungssignal auf dem Rückweg vom Empfänger zum Sender, wobei die Daten auf einem Wechselleiter C_{ech} in Form von wenigstens drei Potentialpegeln übertragen werden, wobei der erste (0) einen ersten Wert von übertragenen Daten repräsentiert, der zweite einen inaktiven Pegel (Vmed) repräsentiert und der dritte (Vdd) einen zweiten Wert von übertragenen Daten repräsentiert, **dadurch gekennzeichnet, dass** das Quittungssignal auf demselben Wechselleiter übertragen wird wie die Daten und von dem Empfänger erzeugt wird, indem er den Wechselleiter auf den inaktiven Potentialpegel treibt, wobei der Sender dieses Treiben detektiert.

2. Verfahren nach Anspruch 1, **dadurch gekennzeichnet, dass** die folgenden Operationen nacheinander durchgeführt werden:
- Senden, durch den Sender, von Daten auf dem Wechselleiter durch Treiben des Wechselleiters auf einen aktiven Potentialpegel,
- Stoppen des Treibens durch den Sender und Detektieren des aktiven Pegels durch den Empfänger,
- Treiben des Wechselleiters auf den inaktiven Pegel durch den Empfänger, wobei der Übergang des Leiters von einem aktiven Pegel auf einen inaktiven Pegel das Quittungssignal bildet,
- Stoppen des Treibens durch den Empfänger und Detektieren des Übergangs des Wechselleiters auf den inaktiven Pegel durch den Empfänger.

3. Verfahren nach Anspruch 2, **dadurch gekennzeichnet, dass** der Übergang des Wechselleiters auf den inaktiven Pegel vom Empfänger selbst detektiert wird, der dann das Treiben stoppt.

4. Verfahren nach Anspruch 3, **dadurch gekennzeichnet, dass** das Detektieren des Übergangs auf den inaktiven Pegel ein Signal zum Deaktivieren der Daten im Hinblick auf die Übertragung einer neuen Data erzeugt.

5. Sendeschnittstellenschaltung für asynchrone Kommunikation, die Folgendes umfasst: zwei Eingänge (Ae, Be) zum Empfangen von zu sendenden Daten, einen Quittungsausgang (AKe) zum Senden eines Quittungssignals und einen mit einem Wechselleiter (C_{ech}) zu verbindenden Datenausgang zum Senden der Daten und zum Empfangen einer Quittungsinformation von einem Empfänger, eine erste Steuerschaltung (BD1, CA1), die mit dem ersten Eingang (Ae) verbunden ist, um den Datenausgang beim Empfangen von ersten zu sendenden Daten auf einen ersten aktiven Potentialpegel zu treiben, eine zweite Steuerschaltung (BD2, CA2), die mit dem zweiten Eingang verbunden ist, um den Datenausgang beim Empfangen von zweiten zu sendenden Daten auf einen zweiten aktiven Potentialpegel zu treiben, einen ersten Schwellendetektor (TH1) zum Detektieren des Übergangs des Datenausgangs vom ersten aktiven Pegel auf einen Zwischenpotentialpegel (Vmed), einen zweiten Schwellendetektor (TH2) zum Detektieren des Übergangs des Datenausgangs vom zweiten aktiven Pegel auf den Zwischenpotentialpegel, eine Schaltung zum Erzeugen eines Quittierungssignals (BD3, BD4), die mit den Schwellendetektoren verbunden ist und ein Quittierungssignal (Acke) auf dem Quittierungsausgang erzeugt, wenn der eine oder der andere Detektor einen Übergang von einem aktiven Pegel auf einen Zwischenpotentialpegel detektiert.

6. Sendeschnittstellenschaltung nach Anspruch 5, **dadurch gekennzeichnet, dass** die Schwellendetektoren die Aufgabe haben, den umgekehrten Übergang des Datenausgangs vom Zwischenpotential auf eines der aktiven Potentiale zu detektieren, und ihre Ausgänge mit den Steuerschaltungen verbunden sind, um das Treiben des Datenausgangs auf den aktiven Pegel nach dem Detektieren des Übergangs des Datenausgangs auf diesen aktiven Pegel zu unterbrechen.

7. Sendeschnittstellenschaltung nach Anspruch 6, **dadurch gekennzeichnet, dass** die Schwellendetektoren mit einer Schaltung zum Halten des aktiven Potentialpegels verbunden sind, um das Potential des Ausgangs auf dem aktiven Pegel schwach zu halten, auf den er nach dem Unterbrechen des Treibens getrieben wurde.

8. Empfangsschnittstellenschaltung für eine asynchrone Kommunikation, die Folgendes umfasst: einen mit einem Wechselleiter (C_{ech}) zu verbindenden Dateneingang, einen Quittungssignaleingang (AKs), zwei Datenausgänge (As, Bs), einen ersten Schwellendetektor (TH'1) zum Detektieren des Übergangs des Dateneingangs von einem Zwischenpotentialpegel auf einen ersten aktiven Potentialpegel und zum Anlegen von Daten an den ersten Ausgang, einen zweiten Schwellendetektor (TH'2) zum Detektieren des Übergangs des Dateneingangs vom Zwischenpotentialpegel auf einen zweiten aktiven Potentialpegel und zum Anlegen von Daten an den zweiten Ausgang, und eine Steuerschaltung (BD'3) zum Steuern des Treibens des Dateneingangs auf den Zwischenpotentialpegel beim Empfangen eines Quittungssignals (Acks) am Quittungssignaleingang.

9. Empfangsschnittstellenschaltung nach Anspruch 8, **dadurch gekennzeichnet, dass** die Schwellendetektoren so ausgelegt sind, dass sie den Übergang des Dateneingangs von einem der aktiven Pegel auf den Zwischenpotentialpegel detektieren, und ihre Ausgänge mit der Steuerschaltung verbunden sind, um das Treiben des Dateneingangs auf den Zwischenpegel nach der Detektion des Übergangs dieses Eingangs auf das Zwischenpotential zu unterbrechen.

10. Empfangsschnittstellenschaltung nach Anspruch 9, **dadurch gekennzeichnet, dass** die Schwellendetektoren mit einer Schaltung zum Halten des Zwischenpotentialpegels verbunden sind, um das Potential des Dateneingangs nach dem Unterbrechen des Treibens des Dateneingangs auf dieses Potential schwach leicht auf dem Zwischenpegel zu halten.
